# EUROPEAN PATENT APPLICATION

(11) **EP 1 786 120 A1**
(43) Date of publication of application: **16.05.2007**
(21) Application number: 06021899.7
(22) Date of filing: 19.10.2006
(51) Int. Cl.: H04B 7/26

(54) **Method and apparatus for a relay**

(30) Priority: 11.11.2005 CN 200510110323
(71) Applicant: Alcatel Lucent, 75008 Paris (FR)
(72) Inventor: Leng, Xiaobing, Pudong Jinqiao 201206 Shangai (CN); Liu, Jimin, Pudong Jinqiao 201206 Shangai (CN); Jin, Shan, Pudong Jinqiao 201206 Shangai (CN)
(74) Representative: Schäfer, Wolfgang

(57) **Abstract**

The present invention discloses a method for implementing relay in a wireless communication network, which method comprises: determining that a present-stage backhaul window for use in the backhaul of a present-stage service has started; and switching from a first frequency to a second frequency to complete the backhaul of the present-stage service. The present invention further discloses a repeater for implementing relay in a wireless communication network, which repeater comprises: means for determining that a present-stage backhaul window for use in the backhaul of a present-stage service has started; and means for switching from a first frequency to a second frequency to complete the backhaul of the present-stage service. According to the present invention, each repeater has its own independent frame whose length is the same as the length of that of the base station. Therefore, the present invention is suitable for network applications with high density and heavy traffic.

## Description

### FIELD OF THE INVENTION

The present invention relates to the field of communication, and particularly to a method and apparatus for implementing relay.

### BACKGROUND OF THE INVENTION

To expand the coverage area of a wireless communication network, an effective method is to adopt wireless network repeaters. A repeater, which is typically deployed at the edge of the base station it belongs to, is used to expand the coverage area of this base station and has the basic function of a base station, whereas its coverage area is relatively small. A base station may be provided with one or more repeaters, and also a repeater may be provided with one or more repeaters so as to form repeater cascade. With repeater cascade, the coverage area of this wireless communication network can be expanded further.

With respect to a Worldwide Interoperability for Microwave Access (WiMAX) wireless communication network, a scheme that supports time-division duplex (TDD) same-frequency multi-hop relay has been proposed. According to this scheme, all base stations and repeaters work with same frequency. Futhermore, wireless backhaul of each repeater also adopts the frequency. Specifically, a base station reserves uplink/downlink transmission slot for its stage 1 repeater in its uplink/downlink sub-frame, respectively. This stage 1 repeater sends downlink service to its user station in its downlink slot and reserves a downlink slot for its stage 2 repeater; in its uplink slot, this stage 1 repeater receives uplink service from its user station and reserves an uplink slot for its stage 2 repeater. Reasoning by analogy, the above mechanism can be extended to repeaters at lower stages, such as the stage 3 repeater, the stage 4 repeater, ..., the stage N repeater. For a repeater, it only communicates with its user station and its lower-stage repeater in the uplink/downlink slot, however, it will occupy the access slot of its higher-stage device (base station or repeater) when the repeater backhauls service to its base station or its higher-stage repeater.

A disadvantage of this scheme, however, is that since all base stations and repeaters work with the same frequency, and a base station and/or a repeater reserves uplink/downlink slot for their repeaters, the system's capacity will decrease drastically when there are many hops.It means the scheme is not suitable for network applications with high density and heavy traffic.

Therefore, there is a need to provide a method and a apparatus for implementing relay, which can be adapted to network applications with high density and heavy traffic.

### SUMMARY OF THE INVENTION

According to the first aspect of the present invention, a method is provided for implementing relay in a wireless communication network, said method comprises the steps of: determining that a present-stage backhaul window for use in the backhaul of a present-stage service has started; and switching from a first frequency to a second frequency to complete the backhaul of the present-stage service.

According to the second aspect of the present invention, a repeater is provided for implementing relay in a wireless communication network, said repeater comprises: means for determining that a present-stage backhaul window for use in the backhaul of a present-stage service has started; and means for switching from a first frequency to a second frequency to complete the backhaul of the present-stage service.

According to the third aspect of the present invention, a method is provided for implementing relay in a wireless communication network, said method comprises the steps of: determining that a lower-stage backhaul window for use in the backhaul of a lower-stage service has started; and sending information needed for correct backhaul of the lower-stage service.

And according to the fourth aspect of the present invention, a base station is provided for implementing relay in a wireless communication network, said base station comprises: means for determining that a lower-stage backhaul window for use in the backhaul of a lower-stage service has started; and means for sending information needed for correct backhaul of the lower-stage service.

In the present invention, each repeater has its own independent frame whose length is the same as the length of that of the base station. Therefore, the present invention is suitable for network applications with high density and heavy traffic.

Additionally, in the present invention, wireless backhaul links are used between a repeater and a base station and between a repeater and another repeater. Therefore, deployment cost is low and operational cost is also low, and rapid deployment of a network can be achieved accordingly.

### BRIEF DESCRIPTION ON THE DRAWINGS

Other objects and effects of the present invention will become more apparent by following detailed description taken in conjunction with the accompanying drawings, in which:
Fig.1 shows a WiMAX TDD physical layer frame structure;
Fig. 2 shows a WiMAX TDD physical layer frame structure having a backhaul window;
Fig. 3 shows a network structure under single-hop single-repeater;
Fig. 4 shows an exemplary backhaul operation process under single-hop single-repeater;
Fig. 5 shows a working flowchart of a repeater;
Fig. 6 shows an exemplary network structure under single-hop multi-repeater;
Fig. 7 shows an exemplary backhaul operation process under single-hop multi-repeater;
Fig. 8 shows an exemplary network structure under multi-hop single-repeater;
Fig. 9 shows an exemplary backhaul operation process under multi-hop single-repeater;
Fig. 10 shows an exemplary block diagram of a repeater; and
Fig. 11 shows an exemplary block diagram of a base station.

Like reference numerals designate the same, similar or corresponding features or functions throughout the figures above.

### DESCRIPTION OF THE PREFERRED EMBODIMENTS

Here, the wording "exemplary" is used to mean "serving as an example, embodiment or illustration". Any embodiment described as "exemplary" here can not be necessarily interpreted as being preferable or advantageous over other embodiments.

The basic idea of the present invention is that a base station and a repeater do not work with the same frequency at all time. In detail, the base station always works with the same frequency and has only one mode, i.e., master mode. The repeater has both master mode and slave mode. In master mode, the repeater works with another frequency different from the frequency of the base station, and the user station belonging to it accomplishes access by using this another frequency; however, in slave mode, the working frequency of this repeater switches to the frequency of the base station, and at this point, it becomes a slave apparatus of this base station to perform backhaul operation. Moreover, the repeater can be cascaded.

In other words, the repeater serves as the base station of its user station in normal working condition, while in backhaul working condition, the repeater serves as a user station of its base station or its higher-stage repeater (referred to as father node together), and it is a child node of its father node.

Depending on the number of repeaters a base station has and whether said repeater has repeater(s) belonging to it, there may be divided into three basic situations: 1)single-hop single-repeater, 2) single-hop multi-repeater, and 3) multi-hop single-repeater, as will be described in detail. These situations may be combined to constitute multi-hop multi-repeater, for example.

Hereinafter, embodiments of the present invention will be described in detail with respect to a WiMAX wireless communication network. However, it should be understood to those skilled in the art that the basic idea of the present invention also can also apply to other types of wireless communication networks, such as wireless local area network (WLAN) defined by IEEE 802.11.

To facilitate understanding, first, an introduction will be given to WiMAX TDD physical layer frame structure, such as the structure of a frame transmitted between the base station and the user station. Of course, it should be noted that the present invention also can apply to WiMAX FDD (frequency-division duplex) mode. Here, explanation is made in terms of TDD mode for the purpose of conciseness. In the WiMAX standard there are defined various physical layer standards (such as SC (single carrier), SCa (single carrier advanced), OFDM (orthogonal frequency division multiplexing), OFDMA (orthogonal frequency division multiple access), etc.). Although specific formats thereof are different from one another, the structure is basically same.

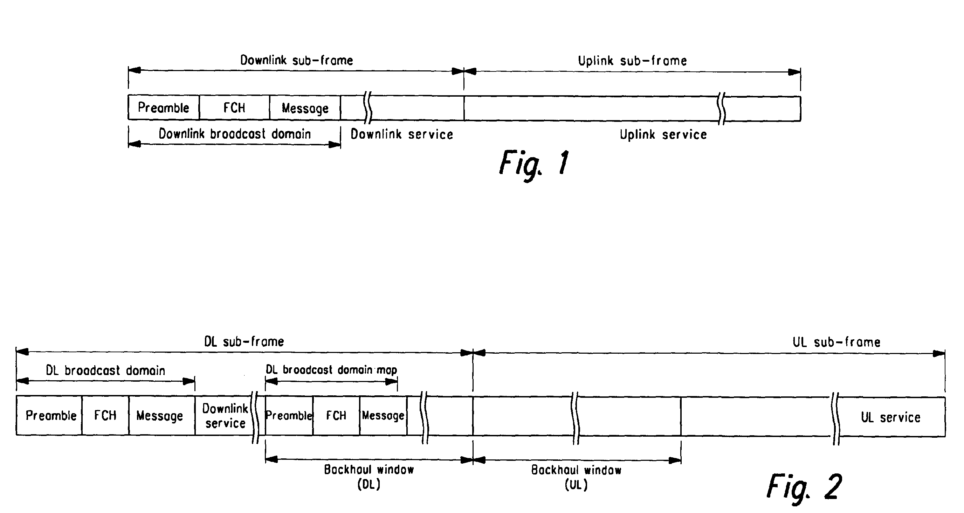

Fig. 1 shows a WiMAX TDD physical layer frame structure. In the frame structure as shown in Fig. 1, a downlink sub-frame comprises a downlink broadcast domain. The downlink broadcast domain comprises a preamble, a frame control header (FCH), various downlink broadcast control messages and the like. Among them, the preamble is used for physical synchronization and equalization of a user station; FCH contains a downlink frame prefix that prescribes characteristics and lengths of various downlink burst transmissions; and the downlink broadcast control messages are used to transmit to user station DL-MAP (downlink map), UL-MAP (uplink map), DCE (downlink channel description), UCD (uplink channel description) link control messages, said messages define ways of dividing between uplink/downlink resources in a frame and properties of physical channels. Only when user stations belonging to a base station correctly receive the downlink broadcast domain, can they perform correct transmission and reception operations.

Since the start portion in a WiMAX frame is a downlink broadcast domain and all user stations must receive the downlink broadcast domain to complete synchronization and transmission operations, each base station and each repeater need to utilize the start portion of a frame to send the downlink broadcast domain to its slave apparatuses.

Moreover, the basic working process of a repeater is as follows: first it enters user station mode, at which point, it, like common user station, utilizes the original downlink broadcast domain to complete synchronization and transmission operations with its father node; then, it negotiates with its father node to determine the size and location of a backhaul window; afterwards, it enters repeater operational mode and complete access and backhaul operations by switching of master/salve mode.

Then, a problem will arise. That is, when a repeater enters repeater operational mode, it needs to receive downlink broadcast domain information from its father node so as to acquire synchronization and relevant control information for the backhaul operation.

According to an embodiment of the present invention, the downlink broadcast domain of each frame is provided to a repeater by using the method for mapping downlink broadcast domain. Specifically, the father node of a repeater copies the downlink broadcast domain of a frame into the downlink backhaul window of this repeater. Thus, when this repeater switches to slave mode to perform the backhaul operation, it can receive the downlink broadcast down information of its father node.

Fig. 2 shows a WiMAX TDD physical layer frame structure having a backhaul window according to an embodiment of the present invention. As shown in Fig. 2, based on the existing WiMAX frame structure, this embodiment defines a dedicated sub-frame that is embedded into the downlink service domain and the uplink service domain to serve as the downlink backhaul window and the uplink backhaul window of the repeater, respectively. Moreover, a downlink broadcast domain map of the father node thereof is inserted to the start portion of the downlink backhaul window.

According to the embodiment, when the downlink broadcast domain map is inserted to a backhaul window, the preamble of this downlink broadcast domain map will be modified to differ from the preamble of the original downlink broadcast domain. Thus, the synchronization operation of common user stations under the same father node is prevented from being affected, otherwise, they cannot judge the actual start location of a frame. At the same time, other control information such as FCH, DL-MAP, UL-MAP, DCD and UCD is simplified, removing information for user stations in the original downlink broadcast domain, reserving only information needed by this repeater, so as to save resources.

In this way, the backhaul window of the repeater is transparent to common user stations. Only when the repeater enters salve node, is the downlink broadcast domain map identified, and are synchronization and backhaul operations completed.

In this embodiment, the preamble of this downlink broadcast domain map is not specifically defined provided it differs from the preamble of the original downlink broadcast domain.

Hereinafter, a repeater wireless backhaul operation based on the frame structure as shown in Fig. 2 will be described in terms of different applications.

### Single-hop single-repeater

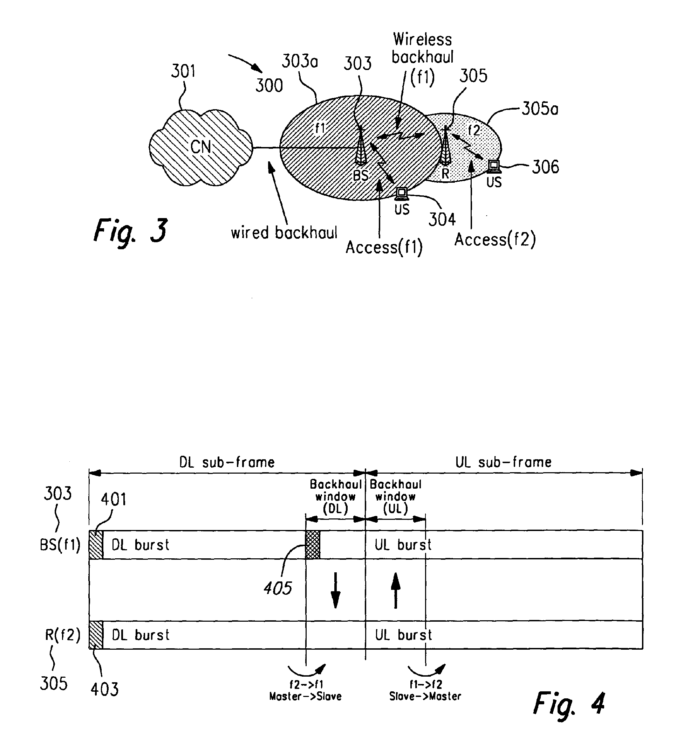

Fig. 3 shows a network structure under single-hop single-repeater. As shown in Fig. 3, this exemplary network structure 300 comprises a core network 301, a base station 303, a user station 304 of the base station 303, a repeater 305 of the base station 303, and a user station 306 of the repeater 305. The repeater 305 is deployed at the edge of the base station 303 and has coverage 305a, thereby expanding the coverage 303a of the base station 303. Wired backhaul is used between the base station 303 and the core network 301, while wireless backhaul is used between the base station 303 and the repeater 305.

Specifically, the base station 303 has a working frequency f1, and it works in master mode all the time and accesses its user stations, such as the user station 304. The repeater 305 has master mode and salve mode. In master mode, its working frequency is f2, and the user station belonging to it, namely the user station 306, achieves access by using this frequency. In slave mode, the repeater 305 switches to the working frequency f1, at which point it is a salve apparatus of the base station 303 to perform the backhaul operation.

Fig. 4 shows an exemplary backhaul operation process under single-hop single-repeater. In a frame, first the repeater 305 works in master mode, broadcasts synchronization and control information to its user stations such as the user station 306 in a downlink broadcast domain 403 and sends downlink services. According to the prior agreement with the base station 303, when its downlink backhaul window is arrived, the repeater 305 switches to salve mode, i.e. switches from the frequency f2 to the frequency f1, and receives in the downlink backhaul window the downlink broadcast domain map 405 from the base station 303 to correctly perform backhaul, where the downlink broadcast domain map 405 is a simplified copy of the downlink broadcast domain 401. Then, the repeater 305 receives downlink backhaul services in the downlink backhaul window. These services are stored temporarily and will be forwarded to the corresponding user station later, for example, in the next frame thereof. The downlink backhaul window ends at its downlink sub-frame. After the repeater 305 enters the uplink sub-frame, its uplink backhaul window is determined to have arrived. In its uplink backhaul window, the repeater 305 forwards uplink backhaul services to the base station 303 which forwards the uplink backhaul services to the core network 301. When the repeater 305 determines that its uplink backhaul window has ended, it returns to master mode, i.e. switches from the frequency f1 to the frequency f2. At this point it receives all sorts of services from its common user stations, such as the user station 306. Through switching, the repeater 305 achieves access of the user station 306 belonging to it and implements wireless backhaul of services.

Obviously, the base station 303 and the repeater 305 do not interfere with each other. When they work in master mode, they are in different frequencies. That is, the base station 303 is in the frequency f1, while the repeater 305 is in the frequency f2. When the repeater 305 enters slave mode, it achieves wireless backhaul of services by using the frequency resources of the base station 303, at which point it becomes a user station of the base station 303.

Moreover, when the base station 303 determines that the downlink backhaul window of the repeater 305 has arrived, it adds the downlink broadcast domain map 405 to the start potion of the downlink backhaul window. The downlink broadcast domain map 405 is a simplified copy of the downlink broadcast domain 401, with its preamble completely differing from that of the downlink broadcast domain 401 so as to avoid the fact that a common user station (such as the user station 304) cannot judge the actual start location of a frame. Additionally, other control information such as FCH, DL-MAP, UL-MAP, DCD and UCD is simplified, removing information for the user station 304 in the original downlink broadcast domain 401, only reserving information needed by the repeater 305, so as to save resources.

In this way, when the repeater 305 enters slave mode, it can acquire synchronization and relevant control information needed for the performance of backhaul operation.

Additionally, the base station 303 sends downlink backhaul services to the repeater 305 in this downlink backhaul window.

Furthermore, when the base station 303 determines that the uplink backhaul window of the repeater 305 has arrived, it receives uplink backhaul services from the repeater 305 in this uplink backhaul window.

By the way, during implementation and for the purpose of simplification, the size and location of the backhaul window are determined through negotiation between the repeater 305 and its father node such as the base station 303 when the repeater 305 is initiated, and afterwards, they do not need to be dynamically adjusted.

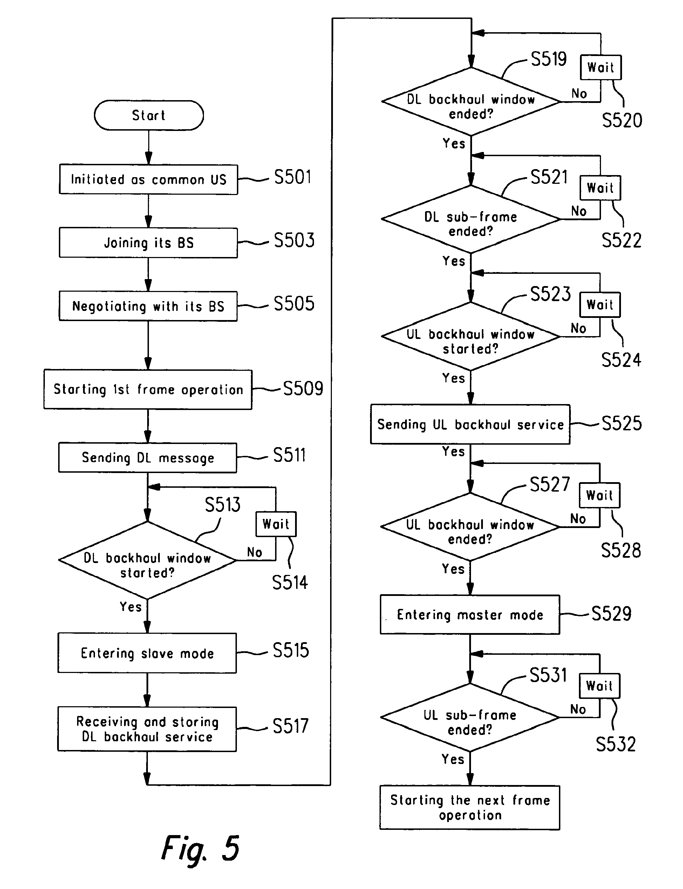

Fig. 5 shows a working flowchart of a repeater. This repeater is, for example, the repeater 305 as shown in Fig, 3.

First, the repeater 305 is initiated as a common user station(step S501). Then, the repeater 305 achieves synchronization with its base station 303 by using information such as the preamble in the original downlink broadcast domain (step S503), so that it joins the base station. Afterwards, the repeater 305 negotiates with the base station 303 to determine the location and size of its uplink and downlink backhaul windows (step S505). In this way, both the repeater 305 and the base station 303 can enter wireless backhaul operational mode.

Next, the repeater 305 starts the first frame operation (step S509). A frame operation comprises a downlink sub-frame operation and an uplink sub-frame operation. The repeater 305 first performs a downlink sub-frame operation. In the downlink sub-frame operation, the repeater 305 first enters master mode, works with the frequency f2 and sends downlink information to the user station 306 belonging to it (step S511).

Then, the repeater 305 determines whether or not the downlink backhaul window has started (step S513). If the repeater 305 determines that the downlink backhaul window has not started, it waits for a while (step S514) and returns to the determination step S513.

If the repeater 305 determines that the downlink backhaul window has started, it enters slave mode, switches from the frequency f2 to the frequency f1, i.e. works with the frequency of the base station 303, and searches the downlink broadcast domain map 405 to complete synchronization for the backhaul operation (step S515).

Subsequently, the repeater 305 receives downlink backhaul services from the base station 303 and temporarily stores the received downlink backhaul services so as to forward them to the user station 306 of the repeater 305 in a downlink slot of master mode (step S517).

After that, the repeater 305 determines whether or not the downlink backhaul window has ended (step S519). If the repeater 305 determines that the downlink backhaul window has not ended, it waits for a while (step S520) and returns to the determination step S519.

If the repeater 305 determines that the downlink backhaul window has ended, it determines whether or not the downlink sub-frame has ended (step S521). If the downlink sub-frame has not ended, the repeater 305 waits for a while (step S522) and returns to the determination step S521.

If the repeater 305 determines that the downlink sub-frame has ended, it performs the uplink sub-frame operation.

First, the repeater 305 determines whether or not the uplink backhaul window has started (step S523). If the repeater 305 determines that the uplink backhaul window has not started, it waits for a while (step S524) and returns to the determination step S523.

If the repeater 305 determines that the uplink backhaul window has started, it sends the temporarily stored uplink backhaul services from the user station 306 belonging to it (step S525).

Then, the repeater 305 determines whether or not the uplink backhaul window has ended (step S527). If the repeater 305 determines that the uplink backhaul window has not ended, it waits for a while (step S528) and returns to the determination step S527.

If the repeater 305 determines that the uplink backhaul window has ended, it enters master mode, switches from the frequency f1 to the frequency f2, i.e. re-works with its own frequency, receives uplink services from its user station 306, and temporarily stores these services so as to backhaul these services to its base station 303 in a subsequent uplink backhaul operation.

Afterwards, the repeater 305 determines whether or not the uplink sub-frame has ended (step S531). If the uplink sub-frame has not ended, the repeater 305 waits for a while (step S532) and returns to the determination step S531.

If the repeater 305 determines that the uplink sub-frame has ended, it returns to the downlink sub-frame operation and starts a subsequent frame operation similar to steps S511 to S532.

It should be noted that after the repeater 305 enters the downlink backhaul operation, even if the downlink backhaul window has ended, the repeater 305 does not re-switch to master mode but is in an idle state. Only when the uplink backhaul operation has completed, the repeater 305 re-switches to master mode to receive uplink services from its user station 306. This simplifies the implementation complexity of the master/slave mode switching operation.

Of course, those skilled in the art should understand that the present invention is not limited to this. In other words, when the downlink backhaul window has ended, the repeater 305 may switch to master mode to access its user stations. When the uplink backhaul window has started, the repeater 305 switches from master mode to slave mode again so as to perform the backhaul of uplink services.

Additionally, the downlink backhaul window and the uplink backhaul window of the repeater 305 are located in the end portion of the downlink sub-frame of a frame and in the start portion of the uplink sub-frame of the frame, respectively. Of course, those skilled in the art should understand that the present invention is not limited to this. The repeater 305 may negotiate with its father node, namely the base station 303, to arrange its uplink/downlink backhaul window.

### Single-hop multi-repeater

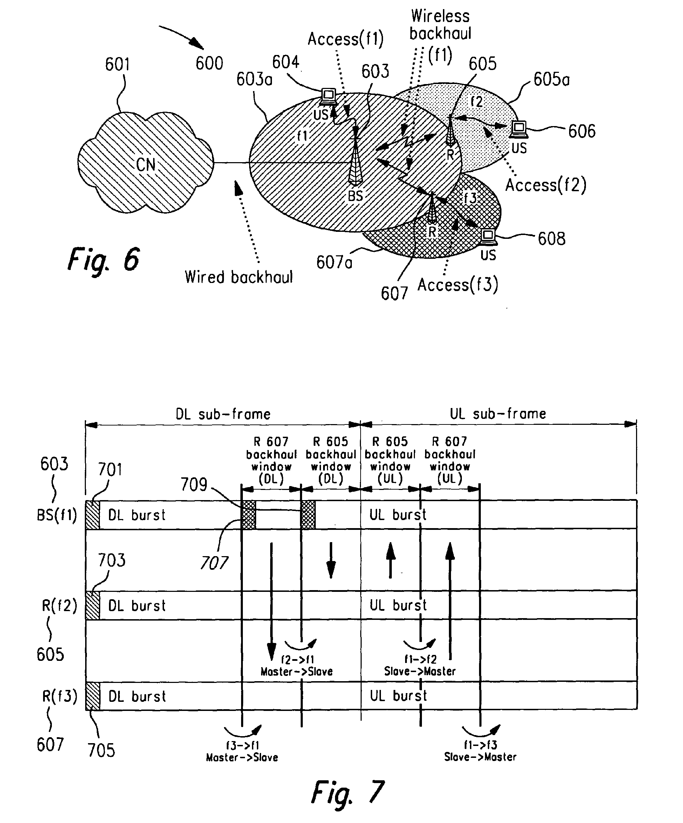

Fig. 6 shows an exemplary network structure under single-hop multi-repeater. As shown in Fig. 6, this exemplary network structure 600 comprises a core network 601, a base station 603, a user station 604 of the base station 603, repeaters 605 and 607 of the base station 603, a user station 606 of the repeater 605 and a user station 608 of the repeater 607. The repeaters 605 and 607 are deployed at different locations of the edge of the base station 603 and have coverage 605a and coverage 607a, respectively, thereby expanding the coverage 603a of the base station 603. Wired backhaul is used between the base station 603 and the core network 601, while wireless backhaul is used between the base station 603 and the repeaters 605, 607.

Generally, the repeaters 605 and 607 use different frequencies to overcome interference between them.

Specifically, the base station 603 has a working frequency f1, and it works in master mode all the time and accesses its user stations, such as the user station 604. The repeaters 605 and 607 each have master mode and salve mode. In master mode, the working frequency of the repeater 605 is f2, and its user station, namely the user station 606, achieves access by using this frequency. In slave mode, the repeater 605 switches to the working frequency f1, at which point it is a salve apparatus of the base station 603, to perform a backhaul operation. Additionally, in master mode, the working frequency of the repeater 607 is f3, and its user station, namely the user station 608, achieves access by using this frequency. In slave mode, the repeater 607 switches to the working frequency f1, at which point it becomes a slave apparatus of the base station 603, to perform a backhaul operation.

Fig. 7 shows an exemplary backhaul operation process under single-hop multi-repeater. In a frame, first the repeaters 605 and 607 work in master mode, broadcast synchronization and control information to their respective user stations such as the user stations 606 and 608 in the downlink broadcast domain 703 and 705, respectively, and send downlink services.

According to the prior agreement with the base station 603, when its downlink backhaul window is determined to have arrived, the repeater 607 switches to salve mode, i.e. switches from the frequency f3 to the frequency f1, and receives in the downlink backhaul window the downlink broadcast domain map 707 from the base station 603 to correctly perform backhaul, where the downlink broadcast domain map 707 is a simplified copy of the downlink broadcast domain 701. Then, the repeater 607 receives downlink backhaul services in the downlink backhaul window. These services are stored temporarily and will be forwarded to the corresponding user station later, for example, in the next frame thereof.

After the downlink backhaul window of the repeater 607 has ended, according to the prior agreement with the base station 603, the repeater 605 determines that its downlink backhaul window has arrived. Therefore, the repeater 605 switches to slave mode, i.e. switches from the frequency f2 to the frequency f1, and receives in the downlink backhaul window the downlink broadcast domain map 709 from the base station 603 to correctly perform backhaul, where the downlink broadcast domain map 709 is a simplified copy of the downlink broadcast domain 701. Then, the repeater 605 receives downlink backhaul services in the downlink backhaul window. These services are stored temporarily and will be forwarded to the corresponding user station later, for example, in the next frame thereof. The downlink backhaul window ends at the downlink sub-frame.

In other words, after the downlink backhaul window of the repeater 607 has ended, the downlink backhaul window of the repeater 605 starts.

The downlink backhaul window of the repeater 605 ends at the downlink sub-frame. After the repeater 605 enters the uplink sub-frame, its uplink backhaul window is determined to have arrived. In its uplink backhaul window, the repeater 605 forwards uplink backhaul services to the base station 603 which forwards the uplink backhaul services to the core network 601. When the repeater 605 determines that its uplink backhaul window has ended, it returns to master mode, i.e. switches from the frequency f1 to the frequency f2. At this point it receives all sorts of services from its common user stations, such as the user station 606.

Additionally, after the uplink backhaul window of the repeater 605 has ended, the repeater 607 determines that its uplink backhaul window has arrived. In other words, after the uplink backhaul window of the repeater 605 has ended, the uplink backhaul window of the repeater 607 starts. In its uplink backhaul window, the repeater 607 forwards uplink backhaul services to the base station 603 which forwards the uplink backhaul services to the core network 601. After the uplink backhaul window of the repeater 607 has ended, the repeater 607 returns to master mode again, i.e. switches from the frequency f1 to the frequency f3. At this point it receives all sorts of services from its common user stations, such as the user station 608.

Through switching, the repeaters 605 and 607 achieve access of their respective user stations 606, 608 and implement wireless backhaul of services.

With respect to the base station 603, when it determines that the downlink backhaul window of the repeater 607 has arrived, it adds a downlink broadcast domain map 707 to the start portion of the downlink backhaul window. The downlink broadcast domain map 707 is a simplified copy of the downlink broadcast domain 701, with its preamble completely differing from that of the downlink broadcast domain 701 so as to avoid the fact that a common user station such as the user station 604 cannot judge the actual start location of a frame. Likewise, other control information such as FCH, DL-MAP, UL-MAP, DCD and UCD is simplified, removing information for the user station 604 in the original downlink broadcast domain 701, only reserving information needed by the repeater 607, so as to save resources.

In this way, when the repeater 607 enters slave mode, it can acquire synchronization and relevant control information needed for the performance of the backhaul operation.

Additionally, the base station 603 sends downlink backhaul services to the repeater 607 in this downlink backhaul window.

When the base station 603 determines that the backhaul window of the repeater 605 has arrived, it adds a downlink broadcast domain map 709 to the start portion of the downlink backhaul window. The downlink broadcast domain map 709 is a simplified copy of the downlink broadcast domain 701, with its preamble completely differing from that of the downlink broadcast domain 701 so as to avoid the fact that a common user station such as the user station 604 cannot judge the actual start location of a frame. Likewise, other control information such as FCH, DL-MAP, UL-MAP, DCD and UCD is simplified, removing information for the user station 604 in the original downlink broadcast domain 701, only reserving information needed by the repeater 605, so as to save resources.

In this way, when the repeater 605 enters slave mode, it can acquire synchronization and relevant control information needed for the performance of the backhaul operation.

Additionally, the base station 603 sends downlink backhaul services to the repeater 605 in this downlink backhaul window.

When the base station 603 determines that the uplink backhaul window of the repeater 605 has arrived, it receives uplink backhaul services from the repeater 605 in this uplink backhaul window.

When the base station 603 determines that the uplink backhaul window of the repeater 607 has arrived, it receives uplink backhaul services from the repeater 607 in this uplink backhaul window.

It can be seen from the foregoing description that the downlink backhaul window of the repeater 605 is arranged in the end portion of the downlink sub-frame and the uplink backhaul window thereof is arranged in the start portion of the uplink sub-frame. The uplink/downlink backhaul windows of the repeater 607 are arranged on the two sides of the backhaul window of the repeater 605. In the backhaul window of the repeater 605, the repeater 607 can be used for local access or be in idle state. Being in idle state helps to simplify the implementation complexity of the switching operation. The downlink backhaul windows of the repeater 605 and the repeater 607 have their own downlink broadcast domain maps 709 and 707. The preambles thereof may be the same, while the frame control headers differ from each other, correspond to their own control information, respectively. The same preambles will not create operation confusion between the repeater 605 and the repeater 607. This is because that before each repeater joins the base station 603, it will negotiate with the base station 603 to determine the location and size of the backhaul window, and only after the respective backhaul windows have arrived, the repeaters 605 and 607 switch to slave mode, search for the preambles and complete synchronization processes.

Furthermore, it should be noted that although the backhaul window in Fig. 7 extends from the middle of the frame to both sides thereof, practical applications are not limited to this. A repeater may negotiate with its father node and flexibly arranges uplink/downlink backhaul windows provided each repeater can work normally.

### Multi-hop Single-repeater

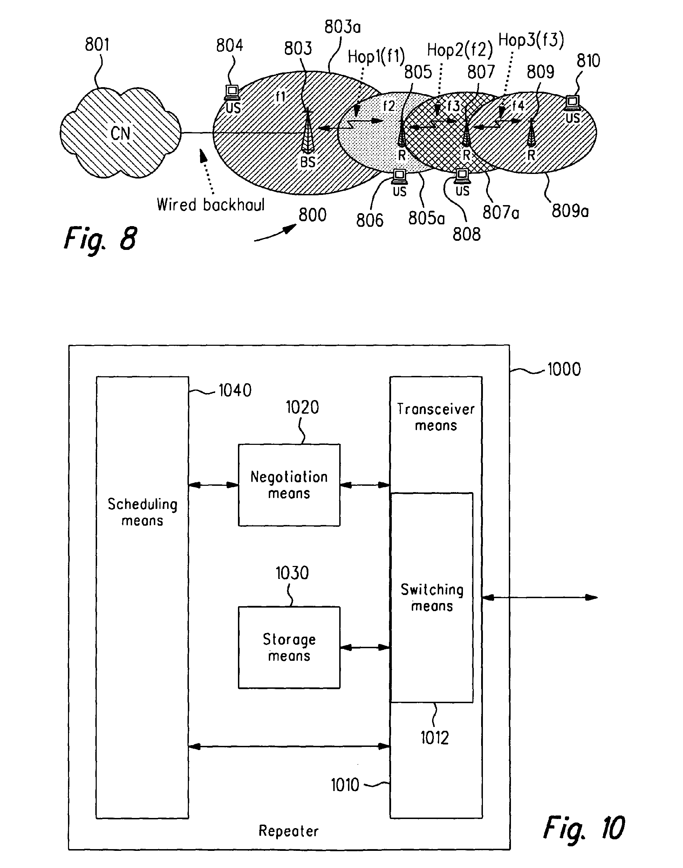

Fig. 8 shows an exemplary network structure under multi-hop single-repeater. As shown in Fig. 8, this exemplary network structure 800 comprises a core network 801, a base station 803, a user station 804 and a repeater 805 of the base station 803, a user station 806 and a repeater 807 of the repeater 805, a user station 808 and a repeater 809 of the repeater 807, and a user station 810 of the repeater 809. The repeater 805 is deployed at the edge of the base station 803 and has coverage 805a, thereby expanding the coverage 803a of the base station 803. The repeater 807 is deployed at the edge of the repeater 805 and has coverage 807a, thereby expanding the coverage 805a of the repeater 805. The repeater 809 is deployed at the edge of the repeater 807 and has coverage 809a, thereby expanding the coverage 807a of the repeater 807. Wired backhaul is used between the base station 803 and the core network 801, while wireless backhaul is used between the base station 803 and the repeater 805, between the repeater 805 and the repeater 807 and between the repeater 807 and the repeater 809.

Generally, the base station 803, the repeaters 805, 807 and 809 use different frequencies.

Specifically, the base station 803 has a working frequency f1, and it works in master mode all the time and accesses the user stations belonging to it, such as the user station 804. The repeaters 805, 807 and 809 each have master mode and salve mode. In master mode, the working frequency of the repeater 805 is f2, and the user station belonging to it, namely the user station 806, achieves access by using this frequency. In slave mode, the repeater 805 switches to the working frequency f1, at which point it is a salve apparatus of the base station 803 to perform backhaul operation. Additionally, in master mode, the working frequency of the repeater 807 is f3, and the user station belonging to it, namely the user station 808, achieves access by using this frequency. In slave mode, the repeater 807 switches to the working frequency f2, at which point it becomes a slave apparatus of the repeater 805 to perform backhaul operation. In master mode, the working frequency of the repeater 809 is f4, and the user station belonging to it, namely the user station 810, achieves access by using this frequency. In slave mode, the repeater 809 switches to the working frequency f3, at which point it becomes a salve apparatus of the repeater 807 to perform backhaul operation.

In other words, in the network structure as shown in Fig. 8, a plurality of repeaters work in a cascaded manner. In addition to access the user stations in its own coverage, a repeater is also responsible for relaying of backhaul services of other repeaters, at which point it plays the role of father node and the relayed node is child node. During the backhaul of services, child node utilizes the frequency resource of its father node, and while serving the user stations, child node has its own frequency resource.

By the way, when the distance between two nodes (the base station or the repeater) is far enough, the two nodes can use the same frequency in order to save frequency resources provided there is no interference between them. For instance, if the distance between the repeater 809 and the base station 803 is far enough, the repeater 809 can also use the frequency f1 to access its user station 810, so that frequency resources are saved.

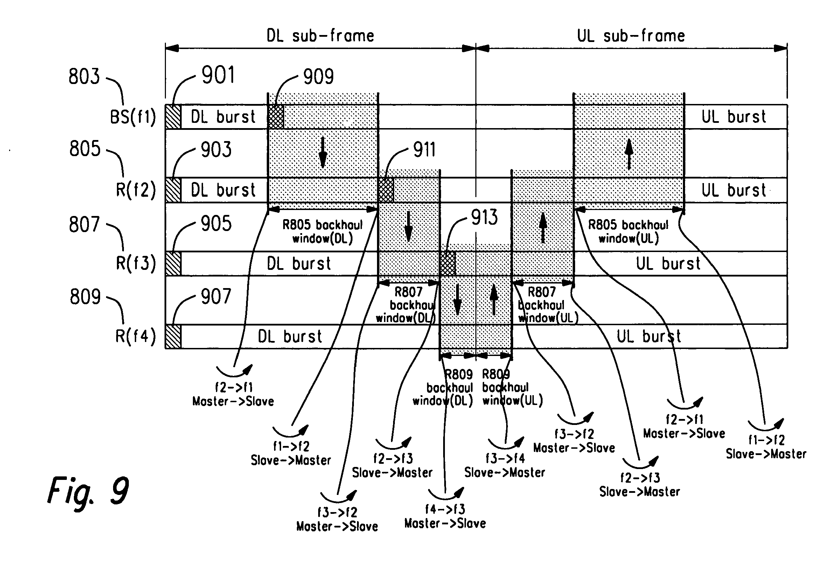

Fig. 9 shows an exemplary backhaul operation process under multi-hop single-repeater. In a frame, first, the repeaters 805, 807 and 809 work in master mode, i.e. respectively work with the frequencies f2, f3 and f4, broadcast synchronization and control information to their respective user stations such as the user stations 806, 808 and 810 in downlink broadcast domain 903, 905 and 907, respectively, and send downlink services.

According to the prior agreement with the base station 803, when the repeater 805 determines that its present-stage downlink backhaul window has arrived, it first switches to salve mode, i.e. switches from the frequency f2 to the frequency f1, and receives in the present-stage downlink backhaul window the downlink broadcast domain map 909 from the base station 803 to correctly perform backhaul, where the downlink broadcast domain map 909 is a simplified copy of the downlink broadcast domain 901. Then, the repeater 805 receives present-stage downlink backhaul services in the downlink backhaul window. These services are stored temporarily and will be forwarded to the corresponding user station later, for example, in the next frame thereof.

After the downlink backhaul window of the repeater 805 has ended, the repeater 805 switches back to master mode, i.e. switches from the frequency f1 to the frequency f2.

According to the prior agreement with the repeater 807, when the repeater 805 determines that the downlink backhaul window of the lower-stage repeater 807 has arrived, a downlink broadcast domain map 911 is added to the start portion of the downlink backhaul window of the repeater 807. The downlink broadcast domain map 911 is a simplified copy of the downlink broadcast domain 903, with its preamble completely differing from that of the downlink broadcast domain 903 so as to avoid the fact that a common user station such as the user station 806 cannot judge the actual start location of a frame. Likewise, other control information such as FCH, DL-MAP, UL-MAP, DCD and UCD is simplified, removing information for the user station 806 in the original downlink broadcast domain 903, only reserving information needed by the repeater 807, so as to save resources.

According to the prior agreement with the repeater 805, when the repeater 807 determines that its present-stage downlink backhaul window has arrived, it first switches to salve mode, i.e. switches from the frequency f3 to the frequency f2, and receives in its present-stage downlink backhaul window the downlink broadcast domain map 911 from the repeater 805 to correctly perform backhaul, where the downlink broadcast domain map 911 is a simplified copy of the downlink broadcast domain 903. Then, the repeater 807 receives downlink backhaul services in the present-stage downlink backhaul window. These services are stored temporarily and will be forwarded to the corresponding user station later, for example, in the next frame thereof.

After the downlink backhaul window of the repeater 807 has ended, the repeater 807 switches back to master mode, i.e. switches from the frequency f2 to the frequency f3.

According to the prior agreement with the repeater 809, when the repeater 807 determines that the downlink backhaul window of the lower-stage repeater 809 has arrived, a downlink broadcast domain map 913 is added to the start portion of the downlink backhaul window of the repeater 809. The downlink broadcast domain map 913 is a simplified copy of the downlink broadcast domain 905, with its preamble completely differing from that of the downlink broadcast domain 905 so as to avoid the fact that a common user station such as the user station 808 cannot judge the actual start location of a frame. Likewise, other control information such as FCH, DL-MAP, UL-MAP, DCD and UCD is simplified, removing information for the user station 808 in the original downlink broadcast domain 905, only reserving information needed by the repeater 809, so as to save resources.

According to the prior agreement with the repeater 807, when the repeater 809 determines that its downlink backhaul window has arrived, it first switches to salve mode, i.e. switches from the frequency f4 to the frequency f3, and receives in its downlink backhaul window the downlink broadcast domain map 913 from the repeater 807 to correctly perform backhaul, where the downlink broadcast domain map 913 is a simplified copy of the downlink broadcast domain 905. Then, the repeater 809 receives downlink backhaul services in the downlink backhaul window. These services are stored temporarily and will be forwarded to the corresponding user station later, for example, in the next frame thereof.

The downlink backhaul window of the repeater 809 ends at the downlink sub-frame. After the repeater 809 enters the uplink sub-frame, its uplink backhaul window is determined to have arrived. In its uplink backhaul window, the repeater 809 forwards uplink backhaul services to the repeater 807. When the repeater 809 determines that its uplink backhaul window has ended, it returns to master mode again, i.e. switches from the frequency f3 to the frequency f4. At this point it can receive all sorts of services from its common user station, such as the user station 810.

When the repeater 807 determines that the uplink backhaul window of the lower-stage repeater 809 has arrived, it receives uplink backhaul services from the repeater 809.

Next, the repeater 807 determines that its present-stage uplink backhaul window has arrived. Thus, the repeater 807 switches to slave mode, i.e. switches from the frequency f3 to the frequency f2. And, the repeater 807 forwards its uplink backhaul services to the repeater 805 with the frequency f2 in its uplink backhaul window. When the repeater 807 determines that its uplink backhaul window has ended, it returns to master mode again, i.e. switches from the frequency f2 to the frequency f3. At this point it can receive all sorts of services from its common user station, such as the user station 808.

When the repeater 805 determines that the uplink backhaul window of the lower-stage repeater 807 has arrived, it receives the uplink backhaul services from the repeater 807.

Next, the repeater 805 determines that its present-stage uplink backhaul window has arrived. Thus, the repeater 805 switches to slave mode, i.e. switches from the frequency f2 to the frequency f1. And, the repeater 805 forwards its uplink backhaul services to the base station 803 with the frequency f1 in its uplink backhaul window. When the repeater 805 determines that its uplink backhaul window has ended, it returns to master mode again, i.e. switches from the frequency f1 to the frequency f2. At this point it can receive all sorts of services from its common user station, such as the user station 806.

When the base station 803 determines that the uplink backhaul window of the lower-stage repeater 805 has arrived, it receives uplink backhaul services from the repeater 805. Then, the base station 803 forwards these uplink backhaul services to the core network 801.

With respect to the base station 803, when it determines that the downlink backhaul window of the repeater 805 has arrived, it adds the downlink broadcast domain map 909 to the start portion of the downlink backhaul window. The downlink broadcast domain map 909 is a simplified copy of the downlink broadcast domain 901, with its preamble completely differing from that of the downlink broadcast domain 901 so as to avoid the fact that a common user station such as the user station 804 cannot judge the actual start location of a frame. Likewise, other control information such as FCH, DL-MAP, UL-MAP, DCD and UCD is simplified, removing information for the user station 804 in the original downlink broadcast domain 901, only reserving information needed by the repeater 805, so as to save resources.

In this way, when the repeater 805 enters slave mode, i.e. switches from the frequency f2 to the frequency f1, it can acquire synchronization and relevant control information needed for the performance of backhaul operation.

And, the base station 803 sends downlink backhaul services to the repeater 805 in this downlink backhaul window.

In the network under multi-hop single-repeater as shown in Fig. 9, typically a repeater that is closer to the core network 801 has a larger backhaul window. In this situation, in frames of some nodes (such as the base station 803 and the repeater 805 in Fig. 9), the uplink/downlink backhaul windows of their child node is not adjacent to each other, and instead, there is a relatively large time interval between them. Such a time interval can be used for access of the local user stations so as to improve the utilization ratio of resources.

Additionally, it would be best if the base station 603 and all the repeaters 805, 807 and 809 could work synchronously so as to reduce radio interference, improve the utilization ratio of frequency resources and enable mobile user station to perform effective handing over.

### Repeater

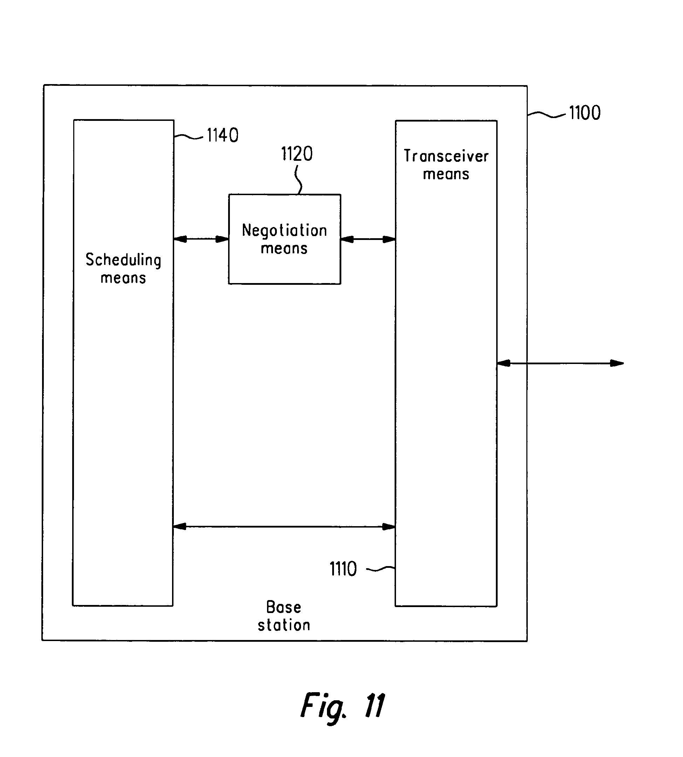

Fig. 10 shows an exemplary block diagram of a repeater. As shown in Fig. 10, the repeater 1000 comprises a transceiver means 1010, a negotiation means 1020, a storage means 1030 and a scheduling means 1040. The transceiver means 1010 comprises a switching means 1012.

The negotiation means 1020 is synchronized with the father node of the repeater 1000 by using a preamble, and negotiates with this father node to determine the location and size of a backhaul window for use in the backhaul of a present-stage service by using a pre-appointed message, and notifies the scheduling means 1040 of the negotiation result.

Further, the negotiation means 1020 is synchronized with a child node of the repeater 1000 by using another preamble, and negotiates with this child node to determine the location and size of a backhaul window for use in the backhaul of a lower-stage service by using a pre-appointed message, and notifies the scheduling means 1040 of the negotiation result.

When the scheduling means 1040 determines that the present-stage backhaul window for use in the backhaul of a present-stage service has started, it notifies the switching means 1012 to switch from a first frequency to a second frequency so as to complete the backhaul of the present-stage service.

Then, the transceiver means 1010 receives the present-stage backhaul service and temporarily stores it to the storage means 1030.

When the scheduling means 1040 determines that the aforesaid present-stage backhaul window has ended, it notifies the switching means 1012 to switch from the second frequency back to the first frequency so as to access a present-stage service.

The aforesaid present-stage backhaul window may be a downlink backhaul window, and the present-stage service is a downlink service.

The aforesaid present-stage backhaul window may be an uplink backhaul window, and the present-stage service is an uplink service.

Prior to the backhaul of a present-stage service, the transceiver means 1010 may further receive information needed for the correct backhaul of a present-stage service. The information needed for the correct backhaul of a present-stage service comprises at least one of following: a preamble, a frame control header, a downlink map, an uplink map, downlink channel description and uplink channel description.

Moreover, the preamble comprised in the information needed for the correct backhaul of a present-stage service is not the same as the preamble of the father node of the repeater 1000.

In particular, when the aforesaid present-stage backhaul window is a downlink backhaul window, the present-stage service is a downlink service, and the scheduling means 1040 determines that the present-stage downlink backhaul window has ended and that a present-stage uplink backhaul window has started, it notifies the transceiver means 1010 to perform the backhaul of a present-stage uplink service. And when the scheduling means 1040 determines that the present-stage uplink backhaul window has ended, it notifies the switching means 1012 to switches from the second frequency back to the first frequency so as to access a present-stage service.

And, when the scheduling means 1040 determines that a lower-stage backhaul window for use in the backhaul of a lower-stage service has started, it notifies the transceiver means 1010 to send information needed for the correct backhaul of the lower-stage service with the first frequency. The information needed for the correct backhaul of a lower-stage service comprises at least one of following: a preamble, a frame control header, a downlink map, an uplink map, downlink channel description and uplink channel description.

Moreover, the preamble comprised in the information needed for the correct backhaul of a lower-stage service is not the same as the preamble of its own.

Then, the transceiver means 1010 sends a lower-stage backhaul service.

In particular, when the aforesaid lower-stage backhaul window is a downlink window, the lower-stage service is a downlink service, and the scheduling means 1040 determines that the lower-stage downlink backhaul window has ended and that a lower-stage uplink backhaul window has started, it notifies the transceiver means 1010 to receive a lower-stage uplink backhaul service. When the scheduling means 1040 determines that a present-stage uplink backhaul window has started, it notifies the switching means 1012 to switches from the first frequency back to the second frequency so as to complete the backhaul of the present-stage uplink service. Then, the transceiver means 1010 performs the backhaul of the present-stage uplink service. When the scheduling means 1040 determines that the present-stage uplink backhaul window has ended, it notifies the switching means 1012 to switch from the second frequency back to the first frequency so as to access a present-stage service.

### Base station

Fig. 11 shows an exemplary block diagram of a base station. As shown in Fig. 11, the base station 1100 comprises a transceiver means 1110,a negotiation means 1120 and a scheduling means 1140.

The negotiation means 1120 is synchronized with the repeater 1000 by using a preamble, and negotiates with the repeater to determine the location and size of a backhaul window for use in the backhaul of a service by using a pre-appointed message, and notifies the scheduling means 1140 of the negotiation result.

When the scheduling means 1140 determines that the backhaul window for use in the backhaul of a service of the repeater 1000 has started, it notifies the transceiver means 1110 to send information needed for the correct backhaul of the service.

The information needed for the correct backhaul of the service comprises a preamble, a frame control header, a downlink map, an uplink map, downlink channel description and uplink channel description.

Moreover, the preamble comprised in the information needed for the correct backhaul of the service is not the same as the above preamble which the negotiation means 1120 uses to negotiate with the repeater 1000 so as to determine the location and size of a backhaul window for use in the backhaul of a service.

Then, the transceiver means 1110 sends a backhaul service.

In particular, when the backhaul window is a downlink backhaul window, the service is a downlink service, and the scheduling means 1140 determines that said downlink backhaul window has ended and that an uplink backhaul window has started, it notifies the transceiver means 1110 to receive an uplink backhaul service.

The exemplary embodiments of the present invention have been described with reference to the accompanying drawings. As seen from the foregoing description, each repeater has its own independent frame whose length is the same as the length of the base station. Therefore, the present invention is suitable for network applications with high density and heavy traffic.

Additionally, in the present invention, wireless backhaul links are used between a repeater and a base station and between a repeater and another repeater. Therefore, deployment cost is low and operational cost is also low, and rapid deployment of a network can be achieved accordingly.

Moreover, the backhaul window can be flexibly arranged in the present invention. Therefore, a relatively small backhaul delay can be achieved, which helps the backhaul of delay-sensitive services.

The present invention further has strong scalability.

As many different embodiments of the present invention can be made without departing from the spirit and scope thereof, it should be understood that the invention is not limited to the specific embodiments thereof except as defined in the appended claims.

## Claims

1. A method for implementing relay in a wireless communication network, comprising:
determining that a present-stage backhaul window for use in the backhaul of a present-stage service has started; and
switching from a first frequency to a second frequency to complete the backhaul of said present-stage service.

2. The method according to claim 1, further comprising the steps of:
determining that said present-stage backhaul window has ended; and
switching from said second frequency back to said first frequency to access a present-stage service.

3. The method according to claim 2, further comprising the steps of:
determining that a lower-stage backhaul window for use in the backhaul of a lower-stage service has started; and
sending, with said first frequency, information needed for the correct backhaul of the lower-stage service.

4. The method according to claim 1, further comprising the steps of:
determining that a lower-stage backhaul window for use in the backhaul of a lower-stage service has started; and
sending, with said first frequency, information needed for the correct backhaul of the lower-stage service.

5. The method according to claim 3 or 4, further comprising the step of:
sending a lower-stage backhaul service.

6. The method according to claim 3 or 4, wherein the information needed for the correct backhaul of the lower-stage service comprises at least one of:
a preamble;
a frame control header;
a downlink map;
an uplink map;
downlink channel description; and
uplink channel description.

7. The method according to claim 6, further comprising the step of:
negotiating with a lower-stage apparatus by using another preamble, to determine the size and location of said backhaul window for use in the backhaul of a lower-stage service,
wherein the preamble comprised in the information needed for the correct backhaul of the lower-stage service differs from said another preamble.

8. The method according to claim 3, wherein said lower-stage backhaul window is a downlink backhaul window and said lower-stage service is a downlink service,
wherein said method further comprises:
determining that said lower-stage downlink backhaul window has ended;
determining that a lower-stage uplink backhaul window has started;
receiving a lower-stage uplink backhaul service;
determining that a present-stage uplink backhaul window has started;
switching from said first frequency to said second frequency to complete the backhaul of the present-stage uplink service;
performing the backhaul of the present-stage uplink service;
determining that said present-stage uplink backhaul window has ended; and
switching from said second frequency back to said first frequency to access a present-stage service.

9. The method according to claim 1, wherein said present-stage backhaul window is a downlink backhaul window and said present-stage service is a downlink service.

10. The method according to claim 1, wherein said present-stage backhaul window is an uplink backhaul window and said present-stage service is an uplink service.

11. The method according to claim 1, further comprising the steps of:
receiving a present-stage backhaul service; and
temporarily storing the present-stage backhaul service.

12. The method according to claim 1, further comprising the step of:
receiving information needed for the correct backhaul of the present-stage service.

13. The method according to claim 12, wherein the information needed for the correct backhaul of the present-stage service comprises at least one of:
a preamble;
a frame control header;
a downlink map;
an uplink map;
downlink channel description; and
uplink channel description.

14. The method according to claim 13, further comprising the step of:
negotiating with a higher-stage apparatus by using another preamble, to determine the size and location of said backhaul window for use in the backhaul of the present-stage service,
wherein the preamble comprised in the information needed for the correct backhaul of the present-stage service differs from said another preamble.

15. The method according to claim 1, wherein said present-stage backhaul window is a downlink backhaul window and said present-stage service is a downlink service,
wherein said method further comprises:
determining that said present-stage downlink backhaul window has ended;
determining that a present-stage uplink backhaul window has started;
performing the backhaul of a present-stage uplink service;
determining that said present-stage uplink backhaul window has ended; and
switching from said second frequency back to said first frequency to access a present-stage service.

16. The method according to claim 1, wherein said wireless communication network is a WiMAX wireless communication network.

17. A repeater for implementing relay in a wireless communication network, comprising:
means for determining that a present-stage backhaul window for use in the backhaul of a present-stage service has started; and
means for switching from a first frequency to a second frequency to complete the backhaul of the present-stage service.

18. The repeater according to claim 17, further comprising:
means for determining that said present-stage backhaul window has ended; and
means for switching from said second frequency back to said first frequency to access a present-stage service.

19. The method according to claim 18, further comprising:
means for determining that a lower-stage backhaul window for use in the backhaul of a lower-stage service has started; and
means for sending, with said first frequency, information needed for the correct backhaul of the lower-stage service.

20. The repeater according to claim 17, further comprising:
means for determining that a lower-stage backhaul window for use in the backhaul of a lower-stage service has started; and
means for sending, with said first frequency, information needed for the correct backhaul of the lower-stage service.

21. The repeater according to claim 19 or 20, further comprising:
means for sending the lower-stage backhaul service.

22. The repeater according to claim 19 or 20, wherein the information needed for the correct backhaul of the lower-stage service comprises at least one of:
a preamble;
a frame control header;
a downlink map;
an uplink map;
downlink channel description; and
uplink channel description.

23. The repeater according to claim 22, further comprising:
means for negotiating with a lower-stage apparatus by using another preamble, to determine the size and location of said backhaul window for use in the backhaul of a lower-stage service,
wherein the preamble comprised in the information needed for the correct backhaul of the lower-stage service differs from said another preamble.

24. The repeater according to claim 19, wherein said lower-stage backhaul window is a downlink backhaul window and said lower-stage service is a downlink service,
wherein said repeater further comprises:
means for determining that said lower-stage downlink backhaul window has ended;
means for determining that a lower-stage uplink backhaul window has started;
means for receiving a lower-stage uplink backhaul service;
means for determining that a present-stage uplink backhaul window has started;
means for switching from said first frequency to said second frequency to complete the backhaul of a present-stage uplink service;
means for performing the backhaul of the present-stage uplink service;
means for determining that said present-stage uplink backhaul window has ended; and
means for switching from said second frequency back to said first frequency to access a present-stage service.

25. The repeater according to claim 17, wherein said present-stage backhaul window is a downlink backhaul window and said present-stage service is a downlink service.

26. The repeater according to claim 17, wherein said present-stage backhaul window is an uplink backhaul window and said present-stage service is an uplink service.

27. The repeater according to claim 17, further comprising:
means for receiving a present-stage backhaul service; and
means for temporarily storing the present-stage backhaul service.

28. The repeater according to claim 17, further comprising:
means for receiving information needed for the correct backhaul of the present-stage service.

29. The repeater according to claim 17, wherein the information needed for the correct backhaul of the present-stage service comprises at least one of:
a preamble;
a frame control header;
a downlink map;
an uplink map;
downlink channel description; and
uplink channel description.

30. The repeater according to claim 29, further comprising:
means for negotiating with a higher-stage apparatus by using another preamble, to determine the size and location of said backhaul window for use in the backhaul of the present-stage service,
wherein the preamble comprised in the information needed for the correct backhaul of the present-stage service differs from said another preamble.

31. The repeater according to claim 17, wherein said present-stage backhaul window is a downlink backhaul window and said present-stage service is a downlink service,
wherein said repeater further comprises:
means for determining that said present-stage downlink backhaul window has ended;
means for determining that a present-stage uplink backhaul window has started;
means for performing the backhaul of a present-stage uplink service;
means for determining that said present-stage uplink backhaul window has ended; and
means for switching from said second frequency back to said first frequency to access a present-stage service.

32. The repeater according to claim 17, wherein said wireless communication network is a WiMAX wireless communication network.

33. A method for implementing relay in a wireless communication network, comprising:
determining that a lower-stage backhaul window for use in the backhaul of a lower-stage service has started; and
sending information needed for correct backhaul of said lower-stage service.

34. The method according to claim 33, further comprising the step of:
sending a lower-stage backhaul service.

35. The method according to claim 33, further comprising the step of:
determining that the lower-stage backhaul window for use in the backhaul of a lower-stage service has ended.

36. The method according to claim 33, wherein said lower-stage backhaul window is a downlink backhaul window and said lower-stage service is a downlink service,
wherein said method further comprises the steps of:
determining that said lower-stage downlink backhaul window has ended;
determining that a lower-stage uplink backhaul window has started; and
receiving a lower-stage uplink backhaul service.

37. A base station for implementing relay in a wireless communication network, comprising:
means for determining that a lower-stage backhaul window for use in the backhaul of a lower-stage service has started; and
means for sending information needed for the correct backhaul of said lower-stage service.

38. The base station according to claim 37, further comprising:
means for sending a lower-stage backhaul service.

39. The base station according to claim 37, further comprising:
means for determining that the lower-stage backhaul window for use in the backhaul of a lower-stage service has ended.

40. The base station according to claim 37, wherein said lower-stage backhaul window is a downlink backhaul window and said lower-stage service is a downlink service,
wherein said base station further comprises:
means for determining that said lower-stage downlink backhaul window has ended;
means for determining that a lower-stage uplink backhaul window has started; and
means for receiving a lower-stage uplink backhaul service.
